(19) Europäisches Patentamt

European Patent Office

Office européen des brevets

(11) **EP 1 342 559 B1**

(12) **EUROPEAN PATENT SPECIFICATION**

(45) Date of publication and mention
of the grant of the patent:
**07.06.2006 Bulletin 2006/23**

(51) Int Cl.:
***B29D 11/00*** *(2006.01)* ***B29C 33/38*** *(2006.01)*
***B23P 15/24*** *(2006.01)*

(21) Application number: **03251297.2**

(22) Date of filing: **04.03.2003**

(54) **Method of fabricating an injection mould insert for contact lens moulds and injection mould insert**

Verfahren zur Herstellung eines Inserts für ein Spritzgiesswerkzeug zur Herstellung von Kontaktlinsen und Insert für ein Spritzgiesswerkzeug

Procédé pour la fabrication d'un insert pour un moule pour injecter des lentilles ophtalmiques et insert pour un moule

(84) Designated Contracting States:
**DE FR GB IE IT**

(30) Priority: **04.03.2002 US 361904 P**

(43) Date of publication of application:
**10.09.2003 Bulletin 2003/37**

(73) Proprietor: **Johnson & Johnson Vision Care, Inc.
Jacksonville, FL 32256 (US)**

(72) Inventor: **O'Brien, Keith T.
Jacksonville,
Florida 32256 (US)**

(74) Representative: **Mercer, Christopher Paul et al
Carpmaels & Ransford
43, Bloomsbury Square
London WC1A 2RA (GB)**

(56) References cited:
**EP-A- 0 418 959       WO-A-99/29494
GB-A- 1 463 731       US-A- 2 480 354
US-A- 4 165 158       US-A- 5 376 317**

- **PATENT ABSTRACTS OF JAPAN vol. 017, no. 635 (M-1514), 25 November 1993 (1993-11-25) -& JP 05 200755 A (OLYMPUS OPTICAL CO LTD), 10 August 1993 (1993-08-10)**
- **PATENT ABSTRACTS OF JAPAN vol. 010, no. 266 (P-496), 11 September 1986 (1986-09-11) -& JP 61 092452 A (SUMITOMO BAKELITE CO LTD), 10 May 1986 (1986-05-10) & DATABASE WPI Week 25, 1986 Derwent Publications Ltd., London, GB; AN 159377**
- **PATENT ABSTRACTS OF JAPAN vol. 013, no. 115 (C-578), 20 March 1989 (1989-03-20) -& JP 63 290290 A (NIPPON PLAST CO LTD), 28 November 1988 (1988-11-28)**

## Description

## BACKGROUND OF THE INVENTION

The present invention relates generally to an injection mold insert and a method of fabricating an injection mold insert for molding lens molds which provides a plurality of replicates of a single master mold mandrel which may be produced, for example, by diamond point machining. The mandrel is used to electroform an electroform mold insert component having an optical quality surface which forms a surface of an injection mold. An adhesive is used to fixedly attach the electroform mold insert to a separately machined mold insert substrate.

The subject invention provides substantial reductions in the cost of manufacturing soft contact lenses produced by replicated mold inserts in an automated manufacturing and molding process wherein a replicated mold insert is used to manufacture optical grade plastic mold parts, each of which is used only once to mold a soft contact lens therein and is then disposed of.

The state of the art of manufacturing hydrogel soft contact lenses has progressed to automated molding systems and assembly lines in which each hydrogel soft contact lens is formed by sandwiching a monomer between front curve (FC) and back curve (BC) mold section halves. The monomer is polymerized to form a lens, which is then removed from the mold section halves, further treated and then packaged for consumer use.

In a typical prior art soft contact lens manufacturing process, metal inserts are used in an injection molding machine in an injection molding process to produce many thermoplastic injection molded front curve (FC) molds and back or base curve (BC) molds, each of which FC and BC molds is subsequently used only once to mold a single soft hydrogel contact lens. In this process, the thermoplastic FC mold is dosed with contact lens forming monomer, the BC mold is carefully placed upon the FC mold and the two mold halves pressed together, with excess monomer being expelled into the space outside the optical surfaces of the mold halves. The monomer is then polymerized to form a lens, which is then removed from the mold and further processed to yield the final soft hydrogel lens product.

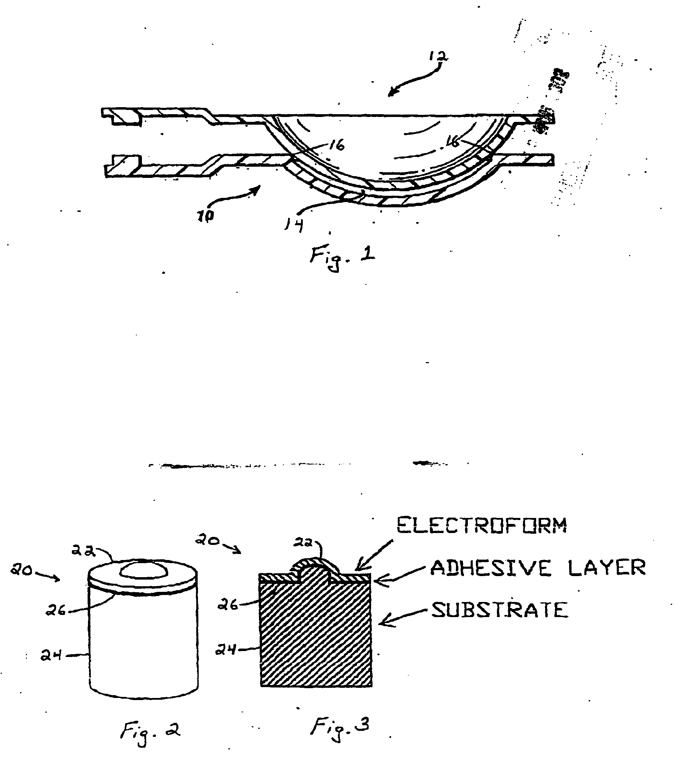

Figure 1 is a side elevational sectional view of a typical prior art mold assembly which includes a FC mold half 10 and a BC mold half 12 which define a volume therebetween in which a soft contact lens 14 is molded.

The FC mold half 10 defines a central curved section with an optical quality concave surface 12, which has a circular circumferential well defined sharp edge 16 extending therearound. The sharp edge 16 is desirable to form a well defined and uniform plastic radius parting line (edge) for the subsequently molded soft contact lens. Similarly, the BC half 12 defines a central curved section with an optical quality convex surface.

The FC and BC molds may be manufactured from any thermoplastic material which is capable of being injection molded and which provides the final cast lens with the required optical properties, with preferred materials for mold frames being polystyrene and polypropylene. To injection mold the FC and BC molds, metal tool inserts of the required configuration are typically machined and mounted in the injection molding machine. The injection molded FC and BC molds are close and reproducible inverse reproductions of the injection metal mold inserts, and the resultant molded contact lenses are close and reproducible reproductions of FC and BC molds.

The injection mold inserts disclosed and illustrated in U.S. Patents 5,702,735 and 5,861,114, are two piece steel inserts which have extremely long lives, but require costly stacking and aligning operations during assembly into the injection mold.

Some prior art two piece steel injection mold inserts have a zero vent design which eliminates a vent and reduces the machining time. These inserts also have extremely long lives, but also require costly stacking and aligning operations during assembly into the injection mold.

Other prior art injection mold inserts are single piece mold inserts and eliminate the need for stacking, but have reduced lives compared to steel mold inserts.

Some prior art injection mold inserts used for manufacturing toric contact lens products are single piece brass inserts of short life, with no stacking and aligning requirement.

An electroform can be attached to a mold substrate by brazing, but the brazing step causes unacceptable distortion of the optical quality surface of the mold insert, such that brazing is not a viable assembly method thereof, and neither is soldering a viable assembly method. Adhesive is used in JP 5-200 755, whose disclosures form the base for the preamble of claims 1 and 7 appended hereto. Specific adhesives are disclosed in JP 61-92452 for joining two metals together.

## SUMMARY OF THE INVENTION

Accordingly, it is a primary object of the present invention to provide an injection mold insert and a method of fabricating an injection mold insert for molding lens molds which reduces the cost of injection mold inserts, reduces the variability of substantially identical replicated injection mold inserts, extends the range of injection mold inserts, and maintains the capabilities of existing injection mold inserts.

The present invention provides an injection mold insert as defined in claim 1 and a method of fabricating an injection mold insert as defined in claim 7. The inserts are for molding lens molds. They provide a plurality of replicates of a single master mold mandrel which may be produced, for example, by diamond point machining. The mandrel is used to electroform an electroform mold insert component having an optical quality surface which forms a surface of an injection mold. A substrate mold insert component is machined separately, and supports and is fixedly attached to the electroform mold insert component by an adhesive.

The present invention's injection mold insert and method of replicating mold inserts provide substantial reductions in the cost of manufacturing soft contact lenses produced by the replicated mold inserts in an automated manufacturing and molding process.

## BRIEF DESCRIPTION OF THE DRAWINGS

The foregoing objects and advantages of the present invention for a method of fabricating an injection mold insert for molding lens molds may be more readily understood by one skilled in the art with reference being had to the following detailed description of several embodiments thereof, taken in conjunction with the accompanying drawings wherein like elements are designated by identical reference numerals throughout the several views, and in which:

Figure 1 is a side elevational sectional view of a typical prior art mold assembly which includes a front curve mold half and a back curve mold half which define a volume therebetween in which a soft contact lens is molded.

Figure 2 is a front perspective view of an electroform-manufactured front or base curve mold insert constructed pursuant to the teachings of the present invention.

Figure 3 is a sectional view through the center of the electroform manufactured mold insert of Figure 2, and illustrates in greater detail the assembly of an electroform manufactured optical quality electroform insert component to a substrate insert component by an adhesive pursuant to the teachings of the present invention.

## DETAILED DESCRIPTION OF THE INVENTION

Optical mold inserts have an optical quality surface to mold optical components therefrom, and are relatively expensive and difficult to fabricate. The number of optical mold inserts required for the commercial production of soft contact lenses will be very high in the future; the number of stock keeping units (SKUs) of soft contact lenses will increase significantly in the future with the continued introduction of new products for bifocals, torics, etc.

All optical mold inserts in a mold block should in principle be identical, and as a practical matter, replicates of a master mold insert should be sufficiently closely identical to the master mold such that the final end products of soft contact lenses are commercially acceptable products. It would be attractive if a single master optical mold insert machined, for example, by single point diamond turning could be reproduced or replicated to produce multiple replicated copies thereof, which would result in a substantially less costly manufacturing process for the soft contact lenses.

Electroform pulse-plating is a process which potentially can be used for this purpose, with the application of an electroforming process to the production of replicated optical mold inserts. Usually only a thin shell of a metal such as nickel which reproduces only one surface is fabricated by an electroforming process, whereas optical mold inserts are solid three dimensional parts which require precise accurate overall dimensions.

Moreover, the thermal conductivity of the replicated optical mold inserts must be high, uniform and controlled as the mold inserts should be capable of being rapidly heated and cooled during the commercial molding process.

If only an optical top part or portion of a master optical mold insert is replicated or copied, the replicated top part must be capable of being joined to a substrate or base part of the optical mold insert with high accuracy (with concentric alignment as well as total length) with a very fine tolerance. Also the joint therebetween must be relatively uniform and not have any air-gaps. It is particularly important in the replication of mold inserts that the replicated mold inserts have a longitudinal height or length and concentric alignment which are precisely reproduced within commercially acceptable tolerances.

A process has been developed for electroform pulse-plating which produces totally stress free parts with stable dimensions, and also results in superior uniformity and control of the thickness of the deposited or plated layer. This process is currently being used to produce high precision optical molds for mixed diffractive and regular optics. The electroform pulse-plating process disclosed in EP 0 835 335 is applicable and suitable to the present invention. However, other prior art electroform pulse-plating processes may also have utility in the practice of the present invention.

Figure 2 is a front perspective view of an electroform-manufactured base or front curve mold insert 20. Figure 3 is a sectional view through the center of the electroform-manufactured mold insert 20 of Figure 2, and illustrates in greater detail the assembly of an electroform-manufactured, optical quality, electroform insert mold component 22 to a substrate insert mold component 24 by a suitable adhesive 26 pursuant to the teachings of the present invention.

The mold insert 20 shown in Figures 2 and 3 can be manufactured by using a mandrel or master mold, from which many electroform insert components 22 as shown in Figures 2 and 3 are reproduced.

The mandrel is preferably produced by precise machining of the optical quality surface thereof, such as by diamond point machining. The optical quality surface of the mandrel is then used to electroform many electroform insert components 22 thereon by an electroform process, as is known in the art.

The mandrel can be produced as a solid one piece mandrel, or alternatively the mandrel can be produced as a two piece mandrel, wherein the optical quality surface is preferably machined on a component which is then joined to a mandrel substrate component to form the complete mandrel. The mandrel is preferably fabricated in two component pieces, a precision machined piece having a machined optical quality surface and a substrate piece. The two component parts can be fabricated from steel or nickel coated copper alloys, and are then assembled to create a sharp corner to form the sharp edge 16, which is more difficult to achieve with a single piece insert construction. The two pieces of the mandrel need to be stacked and aligned only once during assembly, rather than requiring stacking and aligning each time an insert in used and suffering low tolerances as a consequence thereof. The two components are preferably joined by a suitable adhesive, similar to the manufacture of the two piece adhesively joined mold insert of the present invention. Then the mandrel is used to electroform (eform) insert components 22, as illustrated in Figures 2 and 3, with a high degree of accuracy and with surface finishes.

The electroform component 22 duplicates the precision machined optical quality surface of the mandrel. The duplication is a negative if performed once and a positive if performed twice sequentially. This duplication allows fabrication of inserts which cannot be machined in a concave base curve insert, by machining in a convex curve mandrel and then electroforming a negative concave curve insert component 22. Also, since many electroform insert components 22 of identical dimensions may be fabricated from a single mandrel, insert to insert variations are reduced.

The surface of the electroform insert component 22 is a mirror image of the desired contact lens front surface or back surface, and is preferably manufactured with a thickness between 0.2 and 1.5 mm. As explained hereinabove, the convex optical quality surface of the BC mold may be the result of two forming steps, such that the original machining work is performed on a convex surface.

Prior to the electroform plating of a layer onto the optical quality surface of the mandrel master mold, the optical quality surface of the mandrel can be passivated to prevent the coated layer from adhering to the optical quality surface. Various passivation techniques are well known in the art, and include the formation of a thin separation oxidation layer over the surface, such as by an electrolytic oxidation process wherein the electrolytic current and voltage are controlled to control the thickness of the oxidation layer, or by chemical passivation techniques such as wherein an albumin (protein) separation layer is deposited onto the surface by immersing the surface in an albumin solution for a controlled period of time, or by immersing the surface in a potassium bichromate solution for a controlled period of time.

The substrate mold insert component can be precisely machined with precise dimensions and tolerance, but does not require an optical quality surface. It can be formed of an alloy based upon at least one metal from the group copper, tin, aluminum, iron, nickel and zinc.

The electroform insert component 22 is then adhesively mounted to an insert substrate component by utilizing an adhesive material having properties of high temperature strength and acceptable resistance to distortion under pressure to withstand the operating conditions of the injection molding equipment. The adhesive should be able to withstand an operating temperature of at least 200° C, have an adhesion strength of at

least $413688 \ k \ \dfrac{N}{m^2}$ (60,000 psi), and have a compression strength of at least $413688 \ k \ \dfrac{N}{m^2}$

(60,000 psi). The use of a suitable adhesive permits strain and distortion free mounting of the electroformed insert components 22 onto the insert substrate component 24 and results in improved lens surface quality over that achievable by welding, brazing or soldering. This overall method has considerable economic advantages over the current system of machining each complete mandrel or mold insert to optical quality specifications, with the additional difficulty of machining of a concave surface.

The adhesive layer is preferably thin such that the thermal resistance of the insert is not substantially increased. The structural properties of the adhesive under compression and fatigue loadings is similar to the substrate, such that the mechanical strength of the insert is not significantly reduced.

Epoxy adhesives are preferred adhesives, with Circuit-Bond™ adhesives commercially available from United Resin Corp being particularly suitable to the present invention.

Other suitable adhesives are commercially available from: Abatron, Inc. Kenosha, WI; Conap, Lawrenceville, GA; Dexter Corp., Aerospace Materials Div., Pittsburgh, CA; Dow Coming, Midland, MI; Epoxies Etc., Greenville, RI; GE Company, GE Silicones, Waterford, NY; United Resin Corporation, Royal Oak, MI; and 3M Aerospace, St. Paul, MN.

An alternative approach to forming a single master mandrel by diamond point is to take advantage of the progress in part formation by focused beams of energy which cause deposition of matter, removal of matter, or reaction of matter to occur in three dimensions in computer controlled processes specific to the procedure being used. More specifically stereo lithothography and fast atom bombardment represent methods of matter deposition, ion beam micromachining is a method of matter removal, and two photon polymerization is a method of reacting matter in a three dimensional framework.

Several embodiments and variations of the present invention for a method of fabricating an injection mold insert for molding lens molds are described in detail

**Claims**

1. An injection mold insert (20) comprising:

   an electroform mold insert component (22) having a surface which forms a surface of an injection mold,
   a substrate mold insert component (24) which supports and is fixedly attached to the electroform mold insert component (22) and which does not have an optical quality surface; and
   an adhesive (26) for fixedly securing the electroform mold insert component (22) to the substrate mold insert component (24);

   **characterised in that**:

   the electroform mold insert component (22) is of a size and shape suitable for forming an opthalmic lens and has an optical quality surface.

2. The injection mold insert (20) of claim 1, wherein the injection mold insert duplicates a precision machined optical quality surface of a mandrel used to form the injection mold, and comprises a mirror image of a desired opthalmic lens front surface or back surface.

3. The injection mold insert (20) of claim 1 or claim 2, wherein the substrate mold insert component (24) is formed of an alloy based upon at least one of copper, tin, aluminium, iron, nickel or zinc.

4. The injection mold insert (20) of any one of claims 1 to 3, wherein the electroform mold insert component (22) is formed of a nickel alloy.

5. The injection mold insert (20) of any one of claims 1 to 4, wherein the electroform mold insert component (22) has a thickness between 0.2 and 1.5 mm.

6. The injection mold insert (20) of any one of claims 1 to 5, wherein the adhesive (26) is an epoxy adhesive.

7. A method of manufacturing an injection mold insert (20) comprising:

   electroforming an electroform mold insert component (22) having a surface which forms a surface of an injection mold;
   forming a substrate mold insert component (24) which supports and is fixedly attached to the electroform mold insert component (22) and which does not have an optical quality surface; and
   fixedly securing the electroform mold insert component (22) to the substrate mold insert component (24) by an adhesive (26);

   **characterised in that**:

   the electroform mold insert component (22) is of a size and shape suitable for forming an opthalmic lens and has an optical quality surface.

8. The method of claim 7, including using the injection mold insert (20) for fabricating lens molds used in the casting of contact lenses.

9. The method of claim 7 or claim 8, which produces an injection mold insert (20) according to any one of claims 1 to 6.

10. The method of any one of claims 7 to 9, including electroforming the electroform mold insert component (22) on a mandrel having an optical quality surface.

11. The method of claim 10, wherein the optical quality surface of the mandrel is produced by diamond point machining.

12. The method of claim 11, wherein the mandrel is fabricated in two components pieces, a precision machined piece having a machined optical quality surface and a substrate piece, and the two pieces of the mandrel are fixedly secured together by an adhesive.

13. The method of claim 12, wherein the two pieces of the mandrel are fixedly secured together by an epoxy adhesive.

**Patentansprüche**

1. Spritzgußwerkzeug (20), mit:

   einer Elektroform-Werkzeugkomponente (22), die eine Oberfläche hat, welche eine Oberfläche einer Spritzgußform bildet,
   einer Substrat-Werkzeugkomponente (24), welche die Elektroform-Werkzeugkomponente (22) trägt und fest daran angebracht ist und die keine Oberfläche optischer Qualität hat; und
   einem Klebmittel (26) zum festen Sichern der Elektroform-Werkzeugkomponente (22) an der Substrat-Werkzeugkomponente (24);

   **dadurch gekennzeichnet, daß**:

   die Elektroform-Werkzeugkomponente (22) eine Größe und Form hat, die zum Bilden einer ophthalmischen Linse geeignet ist und eine Oberfläche optischer Qualität hat.

2. Spritzgußwerkzeug (20) nach Anspruch 1, wobei das Spritzgußwerkzeug eine präzisionsbearbeitete Oberfläche optischer Qualität eines Doms dupliziert, der verwendet wird, um die Spritzgußform zu bilden, und ein Spiegelbild der Vorderfläche oder Rückfläche einer gewünschten ophthalmischen Linse aufweist.

3. Spritzgußwerkzeug (20) nach Anspruch 1 oder Anspruch 2, bei dem die Substrat-Werkzeugkomponente (24) aus einer Legierung gebildet ist, die auf wenigstens einem aus Kupfer, Zinn, Aluminium, Eisen, Nickel oder Zink basiert.

4. Spritzgußwerkzeug (20) nach einem der Ansprüche 1 bis 3, bei dem die Elektroform-Werkzeugkomponente (22) aus einer Nickellegierung gebildet ist.

5. Spritzgußwerkzeug (20) nach einem der Ansprüche 1 bis 4, bei dem die Elektroform-Werkzeugkomponente (22) eine Dicke zwischen 0.2 und 1.5 mm hat.

6. Spritzgußwerkzeug (20) nach einem der Ansprüche 1 bis 5, bei dem das Klebmittel (26) ein Epoxyklebmittel ist.

7. Verfahren zum Herstellen eines Spritzgußwerkzeugs (20), das aufweist:

   Elektroformen einer Elektroform-Werkzeugkomponente (22), welche eine Oberfläche hat, die eine Oberfläche einer Spritzgußform bildet;
   Bilden einer Substrat-Werkzeugkomponente (24), die die Elektroform-Werkzeugkomponente (22) trägt und fest daran angebracht ist und die keine Oberfläche optischer Qualität hat; und festes Sichern der Elektroform-Werkzeugkomponente (22) an der Substrat-Werkzeugkomponente (24) durch ein Klebmittel (26);

   **dadurch gekennzeichnet, daß**:

   die Elektroform-Werkzeugkomponente (22) eine Größe und Form hat, die zum Bilden einer ophthalmischen Linse geeignet ist und eine Oberfläche optischer Qualität hat.

8. Verfahren nach Anspruch 7, einschließlich des Verwendens des Spritzgußwerkzeugs (20) zum Herstellen von Linsenformen, die beim Gießen von Kontaktlinsen verwendet werden.

9. Verfahren nach Anspruch 7 oder Anspruch 8, welches ein Spritzgußwerkzeug (20) nach einem der Ansprüche 1 bis 6 erzeugt.

10. Verfahren nach einem der Ansprüche 7 bis 9, einschließlich des Elektroformens der Elektroform-Werkzeugkomponente (22) auf einem Dom mit einer Oberfläche optischer Qualität.

11. Verfahren nach Anspruch 10, bei dem die Oberfläche optischer Qualität des Dorns durch Diamantpunktbearbeitung erzeugt wird.

12. Verfahren nach Anspruch 11, bei dem der Dorn in zwei Komponentenstücken hergestellt wird, einem präzisionsbearbeiteten Stück mit einer bearbeiteten Oberfläche optischer Qualität und einem Substratstück, und die beiden Stücke des Dorns durch ein Klebmittel fest aneinander gesichert sind.

13. Verfahren nach Anspruch 12, bei dem die zwei Stücke des Dorns fest aneinander durch ein Epoxyklebmittel gesichert sind.

## Revendications

1. Insert pour moule à injection (20) comprenant :

   ■ un composant d'insert pour moule électroforme (22) ayant une surface qui forme une surface d'un moule à injection ;
   ■ un composant d'insert pour moule substrat (24) qui supporte et est attaché de façon fixe au composant d'insert pour moule électroforme (22) et qui n'a pas de surface de qualité optique ; et
   ■ un adhésif (26) pour fixer de façon fixe le composant d'insert pour moule électroforme (22) au composant d'insert pour moule substrat (24) ;

   **caractérisé en ce que** :

   le composant d'insert pour moule électroforme (22) a une taille et une forme appropriées pour former une lentille ophtalmique et a une surface de qualité optique.

2. Insert pour moule à injection (20) selon la revendication 1, dans lequel l'insert pour moule à injection copie une surface de qualité optique usinée avec précision d'un mandrin utilisé pour former le moule à injection, et comprend une image inverse d'une surface avant ou arrière de lentille ophtalmique souhaitée.

3. Insert pour moule à injection (20) selon la revendication 1 ou la revendication 2, dans lequel le composant d'insert pour moule substrat (24) est formé d'un alliage basé sur au moins un parmi le cuivre, l'étain, l'aluminium, le fer, le nickel ou le zinc.

**4.** Insert pour moule à injection (20) selon l'une quelconque des revendications 1 à 3, dans lequel le composant d'insert pour moule électroforme (22) est formé d'un alliage de nickel.

**5.** Insert pour moule à injection (20) selon l'une quelconque des revendications 1 à 4, dans lequel le composant d'insert pour moule électroforme (22) a une épaisseur comprise entre 0,2 et 1,5 mm.

**6.** Insert pour moule à injection (20) selon l'une quelconque des revendications 1 à 5, dans lequel l'adhésif (26) est un adhésif époxy.

**7.** Procédé de fabrication d'un insert pour moule à injection (20) comprenant les étapes consistant à :

■ électroformer un composant d'insert pour moule électroforme (22) ayant une surface qui forme une surface d'un moule à injection ;
■ former un composant d'insert pour moule substrat (24) qui supporte et est attaché de façon fixe au composant d'insert pour moule électroforme (22) et qui n'a pas de surface de qualité optique ; et
■ fixer de façon fixe le composant d'insert pour moule électroforme (22) au composant d'insert pour moule substrat (24) par un adhésif (26);

**caractérisé en ce que** :

le composant d'insert pour moule électroforme (22) a une taille et une forme appropriées pour former une lentille ophtalmique et a une surface de qualité optique.

**8.** Procédé selon la revendication 7, comprenant l'utilisation de l'insert pour moule à injection (20) pour fabriquer des moules de lentille utilisés dans la coulée de lentilles de contact.

**9.** Procédé selon la revendication 7 ou la revendication 8, qui produit un insert pour moule à injection (20) selon l'une quelconque des revendications 1 à 6.

**10.** Procédé selon l'une quelconque des revendications 7 à 9, comprenant l'électroformage du composant d'insert pour moule électroforme (22) sur un mandrin ayant une surface de qualité optique.

**11.** Procédé selon la revendication 10, dans lequel la surface de qualité optique du mandrin est produite par usinage à pointe diamant.

**12.** Procédé selon la revendication 11, dans lequel le mandrin est fabriqué en deux pièces composantes, une pièce usinée avec précision ayant une surface de qualité optique usinée et une pièce de substrat, et les deux pièces du mandrin sont fixées de façon fixe l'une à l'autre par un adhésif.

**13.** Procédé selon la revendication 12, dans lequel les deux pièces du mandrin sont fixées de façon fixe l'une à l'autre par un adhésif époxy.

*12*

*16*

*16*

*10*

*14*

Fig. 1

*20* *22*

*26*

*24*

Fig. 2

*20* *22*

ELECTROFORM

*26*

ADHESIVE LAYER

*24*

SUBSTRATE

Fig. 3